# FASCICULE DE BREVET EUROPEEN

(11) **EP 4 449 187 B1**
(45) Date de publication et mention de la délivrance du brevet: **01.04.2026**
(21) Numéro de dépôt: 22839267.6
(22) Date de dépôt: 15.12.2022
(51) Int. Cl.: G02B 27/01

(54) **AFFICHEUR TÊTE HAUTE**
HEAD-UP-ANZEIGE
HEAD-UP DISPLAY

(30) Priorité: 16.12.2021 FR 2113721
(43) Date de publication de la demande: 23.10.2024
(73) Titulaire: Valeo Comfort and Driving Assistance, 94000 Créteil (FR)
(72) Inventeur: MERMILLOD, Pierre, 94000 Créteil (FR); GACHE, Stephane, 94000 Créteil (FR)
(74) Mandataire: Delplanque, Arnaud
(86) Numéro de dépôt international: PCT/EP2022/086086
(87) Numéro de publication internationale: WO 2023/111149

(56) Documents cités:
- FR-A1- 3 102 569

## Description

La présente invention concerne de manière générale le domaine des afficheurs.

Elle concerne plus particulièrement un afficheur tête haute pour un véhicule automobile.

Pour le conducteur d'un véhicule automobile, il est particulièrement confortable de pouvoir visualiser des informations relatives au fonctionnement du véhicule, relatives à une voie de circulation faisant face au véhicule, ou autres, sans avoir pour cela à détourner son regard de cette voie de circulation.

Il est connu dans ce but d'équiper le véhicule automobile avec un afficheur dit « *tête haute »,* comportant, à l'intérieur d'un boîtier, un dispositif de génération d'images duquel émerge un faisceau lumineux source et un système optique de projection adapté pour projeter une image générée par le dispositif de génération d'images vers l'utilisateur, via le pare-brise par exemple, de manière à former une image virtuelle dans le champ de vision d'un conducteur dudit véhicule automobile.

L'image virtuelle, comportant les informations à afficher, se superpose alors visuellement à l'environnement faisant face au véhicule.

Un phénomène à limiter dans un tel afficheur est celui de la charge solaire, c'est-à-dire de la pénétration du rayonnement solaire dans l'afficheur. Celui-ci est en effet susceptible d'endommager les composants constituant l'afficheur, en particulier le dispositif de génération d'images.

Il existe des afficheurs constitués d'éléments munis de filtres passe-bande étroits centrés autour des longueurs d'onde émises par le dispositif de génération d'images de l'afficheur. Ces filtres permettent de préserver le rendu colorimétrique des images générées par le dispositif de génération d'images dans les images virtuelles formées. D'autre part, ils permettent en même temps d'empêcher les autres composantes spectrales du rayonnement solaire de se propager à l'intérieur de l'afficheur, telles que les composantes dans l'infrarouge qui peuvent être particulièrement dommageables du fait de la chaleur qu'elles sont susceptibles de concentrer dans celui-ci. Cependant, de tels filtres sont coûteux et représentent donc une limite économique. Le document FR 3 102 569 A1 décrit un tel afficheur tête haute.

Afin de remédier à ce problème, la présente invention propose un afficheur tête haute comportant, à l'intérieur d'un boîtier :
- un dispositif de génération d'image conçu pour générer un faisceau lumineux traversant un élément optique de sortie, le faisceau lumineux comprenant une composante verte et une composante rouge ;
- un premier réflecteur conçu pour réfléchir le faisceau lumineux en un faisceau intermédiaire ;
- un second réflecteur conçu pour réfléchir le faisceau intermédiaire en un faisceau de sortie, le boîtier comportant une ouverture fermée par une fenêtre traversée par le faisceau de sortie,

la propagation de la lumière à travers l'élément optique de sortie, en réflexion sur le premier réflecteur, en réflexion sur le second réflecteur et à travers la fenêtre définissant un chemin optique présentant deux extrémités,
dans lequel deux éléments parmi l'élément optique de sortie, le premier réflecteur, le second réflecteur et la fenêtre sont pourvus respectivement d'un premier filtre spectral et d'un deuxième filtre spectral,
caractérisé en ce que le premier filtre spectral et le second filtre spectral sont configurés pour empêcher la propagation d'une extrémité à l'autre du chemin optique d'une composante spectrale s'étendant spectralement entre la composante verte et la composante rouge.

Selon l'invention, la composante verte et la composante rouge du faisceau lumineux généré par le dispositif de génération d'image traversent l'afficheur afin de former une image virtuelle dans le champ de vision d'un conducteur. Cette image virtuelle contient donc le contenu colorimétrique du faisceau lumineux généré par le dispositif de génération d'image, qui n'est donc pas altéré. En parallèle, selon l'invention, la combinaison de deux filtres spectraux empêche la propagation de toute composante spectrale comprise entre la composante verte et la composante rouge à l'intérieur de l'afficheur et bloque en particulier cette zone spectrale du rayonnement solaire. Ainsi, l'invention présente l'avantage de réduire le phénomène de charge solaire au sein de l'afficheur sans altérer le contenu colorimétrique des images formées par celui-ci, en particulier d'empêcher la propagation dans l'afficheur d'une composante spectrale à large bande dans le spectre visible.

Dans un mode de réalisation, le premier filtre spectral et le second filtre spectral sont configurés pour empêcher la propagation d'une extrémité à l'autre du chemin optique d'une autre composante spectrale s'étendant spectralement sur le spectre infrarouge.

Ceci permet de réduire davantage la charge solaire au sein de l'afficheur en empêchant la composante spectrale infrarouge du rayonnement solaire de se propager dans l'afficheur, en plus d'une composante spectrale à large bande dans le spectre visible, grâce à l'utilisation de deux filtres spectraux, et donc de proposer un afficheur à charge solaire réduite moins cher à concevoir.

Dans un mode de réalisation, un filtre spectral parmi le premier filtre spectral et le second filtre spectral est un filtre coupe-bande et l'autre filtre spectral est un filtre passe-bas.

Une telle configuration rend la fabrication des composants de l'afficheur aisée et peu coûteuse du fait de la simplicité de fabrication d'un filtre passe-bas et d'un filtre coupe-bande.

Par exemple, les deux éléments sont le premier réflecteur et le second réflecteur.

Dans un autre exemple, les deux éléments sont l'un parmi le premier réflecteur et le second réflecteur, et la fenêtre.

Dans un troisième exemple, les deux éléments sont l'un parmi le premier réflecteur et le second réflecteur, et l'élément optique de sortie.

Dans un autre exemple, les deux éléments sont l'élément optique de sortie et la fenêtre.

Selon une possibilité de réalisation :
- le faisceau lumineux comprend une composante bleue, et/ou
- un élément supplémentaire parmi l'élément optique de sortie, le premier réflecteur, le second réflecteur et la fenêtre, différent des deux éléments, est pourvu d'un troisième filtre spectral, et/ou
- le troisième filtre spectral est configuré pour empêcher la propagation d'une extrémité à l'autre du chemin optique d'une composante spectrale s'étendant spectralement entre la composante bleue et la composante verte.

L'avantage de cette variante est de permettre, par l'ajout d'un filtre, de réduire davantage la charge solaire en empêchant la propagation des longueurs d'onde comprises entre la composante bleue et la composante verte, tout en préservant le contenu colorimétrique des images formées par l'afficheur. En effet, le passage à travers l'intégralité de l'afficheur de la composante rouge, la composante verte et la composante bleue permet la formation d'images en couleurs non altérées spectralement.

Dans un mode de réalisation, le troisième filtre spectral est un filtre coupe-bande.

Un tel filtre est simple à fabriquer et rend ainsi aisée la conception de l'afficheur, celui-ci présentant une réduction du phénomène de charge solaire optimale tout en préservant la qualité colorimétrique des images qu'il forme.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig. 1] est une vue schématique montrant l'intégration d'un afficheur tête-haute selon l'invention dans un véhicule automobile.
[Fig. 2] est une vue agrandie d'un mode de réalisation de l'afficheur tête haute de la figure 1 montrant le trajet des rayons lumineux issus du dispositif de génération d'images à travers l'afficheur tête haute.
[Fig. 3] est une représentation schématique des spectres d'un premier filtre spectral et d'un deuxième filtre spectral dans un premier mode de réalisation de l'invention.
[Fig. 4] est une représentation schématique des spectres du premier filtre spectral et du deuxième filtre spectral dans un deuxième mode de réalisation de l'invention.
[Fig. 5] est une représentation schématique des spectres du premier filtre spectral et du deuxième filtre spectral dans un troisième mode de réalisation de l'invention.
[Fig. 6] est une représentation schématique des spectres du premier filtre spectral, du deuxième filtre spectral et d'un troisième filtre spectral dans une variante du troisième mode de réalisation de l'invention.

Il est à noter que sur ces figures les éléments structurels et/ou fonctionnels communs aux différentes variantes peuvent présenter les mêmes références.

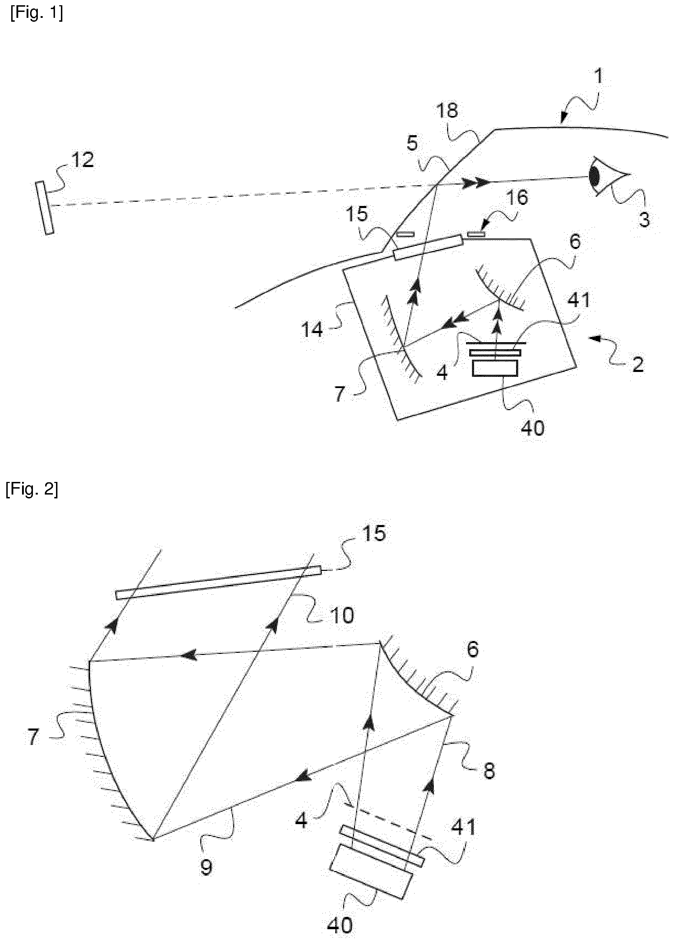

La figure 1 représente schématiquement, de côté, un véhicule automobile 1, équipé d'un afficheur tête haute 2 selon l'invention. Un individu, ici le conducteur 3 (dont seul un œil est représenté), est situé dans l'habitacle du véhicule.

L'afficheur tête haute 2 comporte tout d'abord un boîtier 14 généralement placé sous une planche de bord 16 du véhicule 1 et ayant, ici dans sa partie supérieure proche de la planche de bord 16, une ouverture fermée par une fenêtre transparente 15 adaptée pour laisser passer le faisceau lumineux utile au fonctionnement de l'afficheur 2, comme expliqué dans la suite.

Comme le montre la figure 1, l'afficheur tête haute 2 comprend, à l'intérieur de ce boîtier 14, un dispositif de génération d'images 40 générant une image, un système optique de projection comprenant un premier réflecteur 6 et un second réflecteur 7.

Le dispositif de génération d'images 40 peut par exemple comporter un écran laser (« laser scan » en anglais) comprenant une ou plusieurs sources laser balayant une matrice de pixels et générant une matrice de points sur un diffuseur. Par diffuseur, il est entendu un élément optique destiné à répartir de manière uniforme la lumière émanant d'une source de lumière. Le dispositif de génération d'images 40 peut, en variante, comporter un projecteur de type DLP (« *Digital Light Processing* » en anglais). Par exemple encore, le dispositif de génération d'images 40 peut comporter un écran à cristaux liquides sur silicium (en anglais, « *Liquid crystal on silicon* » ou LCoS). Dans ce cas, une configuration particulière est un système holographique, où l'écran à cristaux liquides sur silicium est utilisé en tant que modulateur spatial de lumière, et où le faisceau provenant de l'écran LCoS subit une transformée de Fourier avant d'atteindre un diffuseur.

Dans tous les cas, selon l'invention, le dispositif de génération d'images 40 comprend trois sources monochromatiques, respectivement une source émettant une composante bleue, une source émettant une composante verte et une source émettant une composante rouge. Par exemple, les trois sources monochromatiques sont trois sources laser. Dans un autre exemple, les trois sources monochromatiques sont trois diodes électroluminescentes émettant chacune sur une plage de longueurs d'onde très restreinte.

Les images générées par le dispositif de génération d'images 40 le sont en fonction d'un signal de commande provenant de l'ordinateur de bord (non représenté) du véhicule 1.

La figure 2 est une vue agrandie d'un mode de réalisation de l'afficheur 2. Le trajet de la lumière à l'intérieur de l'afficheur 2 est représenté.

Le dispositif de génération d'images 40 émet un faisceau lumineux 8. Le faisceau lumineux 8 traverse un plan image 4 en y générant une image intermédiaire. Un élément optique de sortie 41 intercepte le faisceau lumineux 8. L'élément optique de sortie 41 est par exemple de type diffuseur. Par diffuseur, il est entendu un élément optique destiné à répartir de manière uniforme la lumière émanant d'une source de lumière. Alternativement, dans le cas où le dispositif de génération d'images 40 est un afficheur TFT ou un projecteur de type DLP, ou un écran laser (« laser scan »), l'élément optique de sortie 41 peut être une lame céramique présentant un coefficient de conduction thermique élevé permettant d'évacuer la chaleur qu'elle reçoit.

Après avoir traversé l'élément optique de sortie 41, le faisceau lumineux 8 est intercepté par le premier réflecteur 6 qui réfléchit celui-ci en un faisceau intermédiaire 9. Le faisceau intermédiaire 9 est intercepté par le second réflecteur 7 qui réfléchit celui-ci en un faisceau de sortie 10. Le faisceau de sortie 10 traverse la fenêtre 15 pour se projeter vers une lame partiellement transparente 5 de manière à former une image virtuelle 12 à une distance de projection déterminée. Ici, la lame partiellement transparente 5 est le pare-brise du véhicule 1. En variante toutefois, la lame partiellement transparente 5 pourrait être un combineur dédié, par exemple situé entre le pare-brise du véhicule et la fenêtre 15 du boîtier de l'afficheur tête haute 2.

La propagation de la lumière à travers l'élément optique de sortie 41, puis en réflexion sur le premier réflecteur 6, puis en réflexion sur le second réflecteur 7 et à travers la fenêtre 15 définit un chemin optique L présentant une extrémité intérieure et une extrémité extérieure. L'extrémité intérieure se situe en amont de l'élément optique de sortie 41. L'extrémité extérieure se situe en aval de la fenêtre 15.

L'invention vise à limiter la propagation du rayonnement solaire à travers l'afficheur 2 en affectant le moins possible la qualité de l'image virtuelle formée dans le champ de vision du conducteur 3. L'idée sous-jacente à l'invention consiste à empêcher la propagation d'une portion la plus importante possible du rayonnement solaire depuis l'extrémité extérieure vers l'extrémité intérieure du chemin optique L mentionné ci-dessus, tout en permettant la propagation des composantes rouge, verte et bleue émises par le dispositif de génération d'images 40 depuis l'extrémité intérieure vers l'extrémité extérieure du chemin optique L.

Dans la suite, il va être décrit comment ce but peut être atteint par la combinaison de deux filtres spectraux simples à fabriquer au regard des filtres utilisés dans l'art antérieur. Il est envisagé d'appliquer ces deux filtres spectraux à deux éléments choisis parmi l'élément optique de sortie 41, le premier réflecteur 6, le second réflecteur 7 et la fenêtre 15.

On utilise ici la proximité spectrale des composantes verte et bleue émises par le dispositif de génération d'images 40. Typiquement, la composante verte est centrée autour de 530 nm et la composante bleue est centrée autour de 450 nm. La composante rouge est, quant à elle, typiquement centrée autour de 650 nm. Ainsi, la combinaison d'un filtre laissant se propager le long du chemin optique L une bande spectrale incluant la composante verte et la composante bleue avec un filtre empêchant la propagation sur le chemin optique L d'une bande spectrale s'étendant entre la composante verte et la composante rouge permet de transmettre les trois composantes rouge, verte et bleue tout en supprimant les longueurs d'onde comprises entre la composante verte et la composante rouge.

Par ailleurs, l'invention vise également à limiter la propagation des bandes spectrales s'étendant dans l'infrarouge et l'ultraviolet du rayonnement solaire à l'intérieur de l'afficheur 2.

Les deux filtres spectraux consistent en un premier filtre spectral F1 de type passe-bas et un second filtre spectral F2 de type coupe-bande. Par filtre passe-bas, il est entendu un filtre permettant la propagation des longueurs d'onde courtes le long du chemin optique L tel que défini plus haut. Par filtre coupe-bande, il est entendu un filtre empêchant la propagation des longueurs d'onde d'une bande spectrale déterminée le long du chemin optique L tel que défini plus haut.

Dans un premier mode de réalisation, le premier filtre spectral F1, de type passe-bas, est appliqué au premier réflecteur 6, et le second filtre spectral F2, de type coupe-bande, est appliqué au second réflecteur 7.

Dans ce mode de réalisation, le premier réflecteur 6 est de type miroir froid (en anglais « cold mirror »), c'est-à-dire qu'il réfléchit le spectre électromagnétique jusqu'à 700 nm. Ainsi, il ne laisse pas se propager le rayonnement solaire infrarouge le long du chemin optique L. Le rayonnement solaire infrarouge n'atteint donc pas le dispositif de génération d'images 40 et ne l'endommage pas. Par ailleurs, le second réflecteur 7 réfléchit uniquement la bande spectrale s'étendant de l'ultraviolet à 530 nm et la bande spectrale s'étendant entre 650 nm et l'infrarouge. Ainsi, le second réflecteur 7 ne réfléchit pas la portion du rayonnement solaire s'étendant spectralement entre 530 nm (composante verte) et 650 nm (composante rouge) et empêche la propagation de celle-ci à l'intérieur de l'afficheur 2. En parallèle, le premier réflecteur 6 et le second réflecteur 7 réfléchissent tous deux la composante rouge (650 nm), la composante verte (530 nm) et la composante bleue (450 nm) constituant le spectre d'émission du faisceau lumineux émis par le dispositif de génération d'images 40, et permettent à celui-ci de se propager le long du chemin optique L pour former l'image virtuelle 12 sans altération de contenu colorimétrique.

Les valeurs numériques de longueurs d'onde indiquées sont des ordres de grandeur et toute autre valeur reconnue par l'homme de l'art comme représentant une composante spectrale rouge, une composante spectrale verte, ou une composante spectrale bleue peut être utilisée dans le cadre de l'invention.

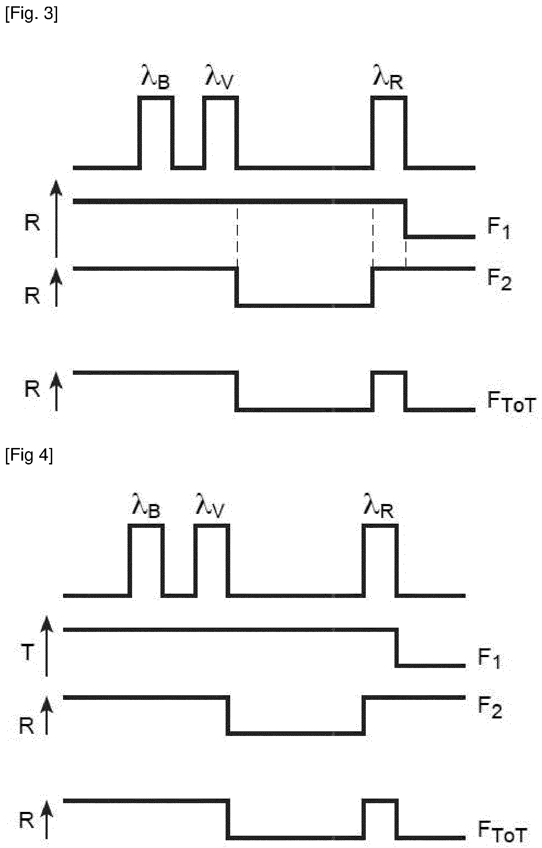

La figure 3 illustre les spectres en réflexion du premier filtre spectral F1 et du second filtre spectral F2. Il peut être observé, sur la courbe F_{TOT}, que la combinaison du premier filtre spectral F1 avec le second filtre spectral F2 permet de laisser passer la composante spectrale rouge λ_{R}, la composante spectrale verte λ_{V} et la composante spectrale bleue λ_{B}.

Il est à noter que la fenêtre 15, en verre ou en plastique, contribue à l'absorption de la portion spectrale du rayonnement solaire s'étendant dans l'ultraviolet et empêche la propagation de cette portion à l'intérieur de l'afficheur 2.

Dans un deuxième mode de réalisation, le premier filtre spectral F1, de type passe-bas, est appliqué soit à la fenêtre 15, soit à l'élément optique de sortie 41. Quant au second filtre spectral F2, de type coupe-bande, il est alors appliqué soit au premier réflecteur 6, soit au second réflecteur 7.

Dans ce mode de réalisation, le premier filtre spectral F1 transmet la bande spectrale visible et réfléchit la bande spectrale s'étendant sur le spectre infrarouge, par exemple au-delà de 700 nm. Ainsi, si le premier filtre spectral F1 est appliqué à la fenêtre 15, celle-ci réfléchit la portion spectrale du rayonnement solaire qui arrive jusqu'à elle, empêchant cette portion spectrale de pénétrer à l'intérieur de l'afficheur 2. Si le premier filtre spectral F1 est appliqué à l'élément optique de sortie 41, celui-ci réfléchit la portion spectrale du rayonnement solaire s'étendant sur le spectre infrarouge qui arrive jusqu'à lui, ce qui évite la propagation de cette portion jusqu'au dispositif de génération d'images 40 ainsi que tout endommagement thermique de ce dernier.

Par ailleurs, toujours dans ce mode de réalisation, le second filtre spectral F2 réfléchit uniquement la bande spectrale s'étendant de l'ultraviolet à 530 nm et la bande spectrale s'étendant entre 650 nm et l'infrarouge. Le second filtre spectral transmet ou, en variante, absorbe, la bande spectrale s'étendant entre 530 nm (composante verte) et 650 nm (composante rouge). La portion spectrale du rayonnement solaire s'étendant entre ces deux composantes n'est donc pas réfléchie et est donc stoppée en cours de propagation à l'intérieur de l'afficheur 2 (par le premier réflecteur 6 ou le second réflecteur 7 selon le cas).

Ainsi, dans ce mode de réalisation, le premier filtre spectral F1 et le second filtre spectral F2 sont configurés pour empêcher la propagation d'une extrémité à l'autre du chemin optique L respectivement d'une composante spectrale s'étendant spectralement sur le spectre infrarouge et d'une composante spectrale s'étendant spectralement entre la composante verte et la composante rouge.

En parallèle, la composante rouge (650 nm), la composante verte (530 nm) et la composante bleue (450 nm) constituant le spectre d'émission du faisceau lumineux émis par le dispositif de génération d'images 40 ne sont pas bloquées le long du chemin optique L. Autrement dit, le faisceau lumineux émis par le dispositif de génération d'images 40 se propage le long du chemin optique L pour former l'image virtuelle 12 sans altération de contenu colorimétrique.

De même que précédemment, les valeurs numériques de longueurs d'onde indiquées sont des ordres de grandeur et toute autre valeur reconnue par l'homme de l'art comme représentant une composante spectrale rouge, une composante spectrale verte, ou une composante spectrale bleue peut être utilisée dans le cadre de l'invention.

La figure 4 illustre le spectre en transmission du premier filtre spectral F1 et le spectre en réflexion du second filtre spectral F2 selon le deuxième mode de réalisation. Il peut être observé, sur la courbe F_{TOT}, que la combinaison du premier filtre spectral F1 avec le second filtre spectral F2 permet de laisser passer la composante spectrale rouge λ_{R}, la composante spectrale verte λ_{V} et la composante spectrale bleue λ_{B}.

De même que dans le premier mode de réalisation, la fenêtre 15, en verre ou en plastique, contribue à l'absorption de la portion spectrale du rayonnement solaire s'étendant dans l'ultraviolet et empêche la propagation de cette portion à l'intérieur de l'afficheur 2.

Dans un troisième mode de réalisation, le premier filtre spectral F1 est appliqué à l'élément optique de sortie 41 et le second filtre spectral F2 est appliqué à la fenêtre 15.

Dans ce mode de réalisation, le premier filtre spectral F1 transmet la bande spectrale visible et réfléchit la bande spectrale s'étendant sur le spectre infrarouge, par exemple au-delà de 700 nm. Ainsi, appliqué à l'élément optique de sortie 41, celui-ci réfléchit la portion spectrale du rayonnement solaire s'étendant sur le spectre infrarouge qui arrive jusqu'à lui et n'est donc pas endommagé par cette portion du rayonnement solaire. Par ailleurs, le second filtre spectral F2 transmet uniquement la bande spectrale s'étendant de l'ultraviolet à 530 nm et la bande spectrale s'étendant entre 650 nm et l'infrarouge et absorbe la bande spectrale s'étendant spectralement entre 530 nm (composante verte) et 650 nm (composante rouge). La portion spectrale du rayonnement solaire s'étendant entre ces deux composantes est donc stoppée par la fenêtre 15 et ne se propage donc pas sur le chemin optique L, à l'intérieur de l'afficheur 2.

En parallèle, la composante rouge (650 nm), la composante verte (530 nm) et la composante bleue (450 nm) constituant le spectre d'émission du faisceau lumineux émis par le dispositif de génération d'images 40 ne sont pas bloquées le long du chemin optique L. Autrement dit, le faisceau lumineux émis par le dispositif de génération d'images 40 se propage le long du chemin optique L pour former l'image virtuelle 12 sans altération de contenu colorimétrique.

De même que précédemment, les valeurs numériques de longueurs d'onde indiquées sont des ordres de grandeur et toute autre valeur reconnue par l'homme de l'art comme représentant une composante spectrale rouge, une composante spectrale verte, ou une composante spectrale bleue peut être utilisée dans le cadre de l'invention.

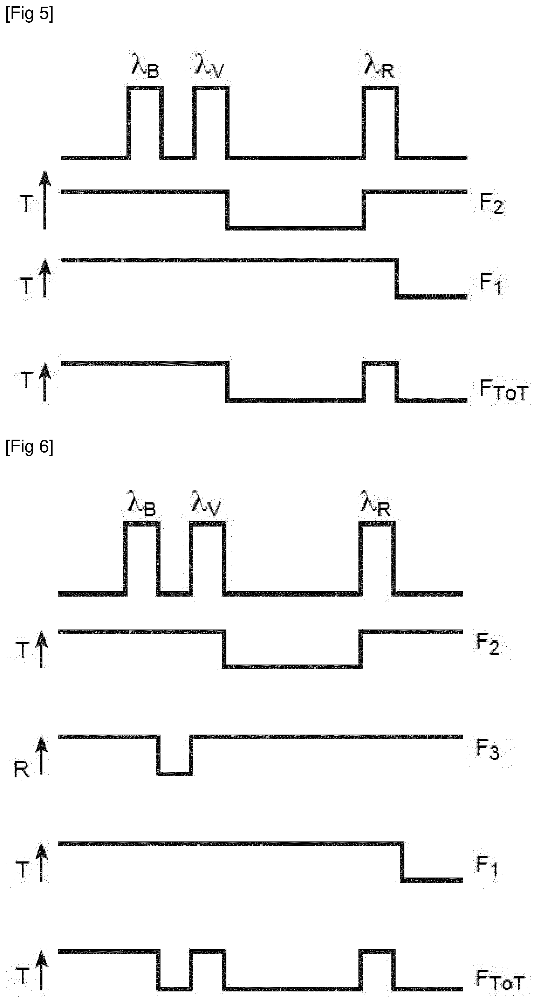

La figure 5 illustre les spectres en transmission du premier filtre spectral F1 et du second filtre spectral F2 selon le troisième mode de réalisation. Il peut être là encore observé, sur la courbe F_{TOT}, que la combinaison du premier filtre spectral F1 avec le second filtre spectral F2 permet de laisser passer la composante spectrale rouge λ_{R}, la composante spectrale verte λ_{V} et la composante spectrale bleue λ_{B}, mais que cette combinaison empêche la propagation d'une extrémité à l'autre du chemin optique L de la composante spectrale s'étendant spectralement entre la composante verte λ_{V} et la composante rouge λ_{B}.

De même que dans le premier et le deuxième modes de réalisation, la fenêtre 15, en verre ou en plastique, contribue à l'absorption de la portion spectrale du rayonnement solaire s'étendant dans l'ultraviolet et empêche la propagation de cette portion à l'intérieur de l'afficheur 2.

Ainsi, la combinaison de deux filtres simples à fabriquer permet d'atténuer la charge solaire et de protéger les composants de l'afficheur 2 tout en préservant la qualité colorimétrique de l'image virtuelle visualisée par l'observateur 3.

Dans une variante du troisième mode de réalisation, l'atténuation de la charge solaire est améliorée par l'utilisation d'un troisième filtre spectral F3 appliqué à l'un parmi le premier réflecteur 6 et le second réflecteur 7. Le troisième filtre spectral est de type coupe-bande. On rappelle que par coupe-bande, il est entendu un filtre empêchant la propagation des longueurs d'onde d'une bande spectrale déterminée le long du chemin optique L tel que défini plus haut. Ici, le troisième filtre F3 spectral transmet, ou en variante, absorbe, la bande spectrale s'étendant entre 450 nm (composante bleue) et 530 nm (composante verte). La portion spectrale du rayonnement solaire s'étendant entre ces deux composantes n'est pas réfléchie et est donc stoppée en cours de propagation à l'intérieur de l'afficheur 2 (par le premier réflecteur 6 ou le second réflecteur 7 selon le cas). Ainsi, dans cette variante, le faisceau lumineux émis par le dispositif de génération d'images 40 se propage en intégralité depuis l'extrémité intérieure vers l'extrémité extérieure du chemin optique L. La qualité de l'image virtuelle, notamment colorimétrique, est alors préservée.

En parallèle, la portion spectrale ultraviolette, la portion spectrale s'étendant entre 450 nm (composante bleue) et 530 nm (composante verte), la portion spectrale s'étendant entre 530 nm (composante verte) et 650 nm (composante rouge) et la portion spectrale s'étendant au-delà de 700 nm, dans l'infrarouge, du rayonnement solaire ne se propagent pas jusqu'au dispositif de génération d'images 40 de l'afficheur 2. Ainsi, la charge solaire est atténuée de manière optimale par l'utilisation de trois filtres simples à fabriquer et avec préservation de la qualité colorimétrique de l'image virtuelle visualisée par l'observateur 3.

La figure 6 illustre les spectres en transmission du premier filtre spectral F1 et du second filtre spectral F2 et en réflexion du troisième filtre spectral F3 selon cette variante du troisième mode de réalisation. Il peut être là encore observé, sur la courbe F_{TOT}, que la combinaison du premier filtre spectral F1 avec le second filtre spectral F2 permet de laisser passer la composante spectrale rouge λ_{R}, la composante spectrale verte λ_{V} et la composante spectrale bleue λ_{B}.

Ainsi, la solution apportée par l'invention permet de réduire la charge solaire d'un afficheur de type tête haute, et donc de préserver ces composants, notamment, le dispositif de génération d'images de l'afficheur, à l'aide d'un nombre réduit de filtres spectraux simples à fabriquer et donc peu coûteux par rapport aux solutions de l'art antérieur.

## Revendications

1. Afficheur tête haute (2) comportant, à l'intérieur d'un boîtier (14) :
- un dispositif de génération d'images (40) conçu pour générer un faisceau lumineux (8) traversant un élément optique de sortie (41), le faisceau lumineux (8) comprenant une composante verte et une composante rouge ;
- un premier réflecteur (6) conçu pour réfléchir le faisceau lumineux (8) en un faisceau intermédiaire (9) ;
- un second réflecteur (7) conçu pour réfléchir le faisceau intermédiaire (9) en un faisceau de sortie (10),
le boîtier (14) comportant une ouverture fermée par une fenêtre(15) traversée par le faisceau de sortie (10),
la propagation de la lumière à travers l'élément optique de sortie (41), en réflexion sur le premier réflecteur (6), en réflexion sur le second réflecteur (7) et à travers la fenêtre (15) définissant un chemin optique (L) présentant deux extrémités,
dans lequel deux éléments parmi l'élément optique de sortie (41), le premier réflecteur (6), le second réflecteur (7) et la fenêtre (15) sont pourvus respectivement d'un premier filtre spectral (F1) et d'un deuxième filtre spectral (F2),
**caractérisé en ce que** le premier filtre spectral (F1) et le second filtre spectral (F2) sont configurés pour empêcher la propagation d'une extrémité à l'autre du chemin optique (L) d'une composante spectrale s'étendant spectralement entre la composante verte et la composante rouge.

2. Afficheur tête haute (2) selon la revendication 1, **caractérisé en ce que** le premier filtre spectral (F1) et le second filtre spectral (F2) sont configurés pour empêcher la propagation d'une extrémité à l'autre du chemin optique (L) d'une autre composante spectrale s'étendant spectralement sur le spectre infrarouge.

3. Afficheur tête haute (2) selon l'une des revendications 1 à 2, **caractérisé en ce qu'**un filtre spectral parmi le premier filtre spectral (F1) et le deuxième filtre spectral (F2) est un filtre coupe-bande et **en ce que** l'autre filtre spectral est un filtre passe-bas.

4. Afficheur tête haute (2) selon l'une des revendications 1 à 3, **caractérisé en ce que** les deux éléments sont le premier réflecteur (6) et le second réflecteur (7).

5. Afficheur tête haute (2) selon l'une des revendications 1 à 3, **caractérisé en ce que** les deux éléments sont l'un parmi le premier réflecteur (6) et le second réflecteur (7), et la fenêtre (15).

6. Afficheur tête haute (2) selon l'une des revendication 1 à 3, **caractérisé en ce que** les deux éléments sont l'un parmi le premier réflecteur (6) et le second réflecteur (7), et l'élément optique de sortie (41).

7. Afficheur tête haute (2) selon l'une des revendication 1 à 3, **caractérisé en ce que** les deux éléments sont l'élément optique de sortie (41) et la fenêtre (15).

8. Afficheur tête haute (2) selon l'une des revendications 1 à 7, **caractérisé en ce que** :
- le faisceau lumineux (8) comprend une composante bleue,
- un élément supplémentaire parmi l'élément optique de sortie (41), le premier réflecteur (6), le second réflecteur (7) et la fenêtre (15), différent des deux éléments, est pourvu d'un troisième filtre spectral (F3), et
- le troisième filtre spectral (F3) est configuré pour empêcher la propagation d'une extrémité à l'autre du chemin optique (L) d'une composante spectrale s'étendant spectralement entre la composante bleue et la composante verte.

9. Afficheur tête haute (2) selon la revendication 8, dans lequel le troisième filtre spectral (F3) est un filtre coupe-bande.

## Patentansprüche

1. Head-up-Display (2), das innerhalb eines Gehäuses (14) umfasst:
- eine Bilderzeugungsvorrichtung (40), die dazu ausgelegt ist, einen Lichtstrahl (8) zu erzeugen, der ein optisches Ausgangselement (41) durchquert, wobei der Lichtstrahl (8) eine grüne Komponente und eine rote Komponente umfasst;
- einen ersten Reflektor (6), der dazu ausgelegt ist, den Lichtstrahl (8) in einen Zwischenstrahl (9) zu reflektieren;
- einen zweiten Reflektor (7), der dazu ausgelegt ist, den Zwischenstrahl (9) in einen Ausgangsstrahl (10) zu reflektieren,
wobei das Gehäuse (14) eine Öffnung aufweist, die durch ein Fenster (15) verschlossen ist, durch das der Ausgangsstrahl (10) hindurchtritt,
wobei die Ausbreitung des Lichts durch das optische Ausgangselement (41), in Reflexion am ersten Reflektor (6), in Reflexion am zweiten Reflektor (7) und durch das Fenster (15) einen optischen Weg (L) mit zwei Enden definiert,
wobei zwei Elemente unter dem optischen Ausgangselement (41), dem ersten Reflektor (6), dem zweiten Reflektor (7) und dem Fenster (15) jeweils mit einem ersten Spektralfilter (F1) und einem zweiten Spektralfilter (F2) versehen sind,
**dadurch gekennzeichnet, dass** der erste Spektralfilter (F1) und der zweite Spektralfilter (F2) konfiguriert sind, um die Ausbreitung einer spektralen Komponente, die sich spektral zwischen der grünen Komponente und der roten Komponente erstreckt, von einem Ende zum anderen des optischen Wegs (L) zu verhindern.

2. Head-up-Display (2) nach Anspruch 1, **dadurch gekennzeichnet, dass** der erste Spektralfilter (F1) und der zweite Spektralfilter (F2) konfiguriert sind, um die Ausbreitung einer anderen spektralen Komponente, die sich spektral im Infrarotspektrum erstreckt, von einem Ende zum anderen des optischen Wegs (L) zu verhindern.

3. Head-up-Display (2) nach einem der Ansprüche 1 bis 2, **dadurch gekennzeichnet, dass** ein Spektralfilter unter dem ersten Spektralfilter (F1) und dem zweiten Spektralfilter (F2) ein Bandstoppfilter ist und dass der andere Spektralfilter ein Tiefpassfilter ist.

4. Head-up-Display (2) nach einem der Ansprüche 1 bis 3, **dadurch gekennzeichnet, dass** die beiden Elemente der erste Reflektor (6) und der zweite Reflektor (7) sind.

5. Head-up-Display (2) nach einem der Ansprüche 1 bis 3, **dadurch gekennzeichnet, dass** die beiden Elemente eines unter dem ersten Reflektor (6) und dem zweiten Reflektor (7) und das Fenster (15) sind.

6. Head-up-Display (2) nach einem der Ansprüche 1 bis 3, **dadurch gekennzeichnet, dass** die beiden Elemente eines unter dem ersten Reflektor (6) und dem zweiten Reflektor (7) und das optische Ausgangselement (41) sind.

7. Head-up-Display (2) nach einem der Ansprüche 1 bis 3, **dadurch gekennzeichnet, dass** die beiden Elemente das optische Ausgangselement (41) und das Fenster (15) sind.

8. Head-up-Display (2) nach einem der Ansprüche 1 bis 7, **dadurch gekennzeichnet, dass**:
- der Lichtstrahl (8) eine blaue Komponente umfasst,
- ein zusätzliches Element unter dem optischen Ausgangselement (41), dem ersten Reflektor (6), dem zweiten Reflektor (7) und dem Fenster (15), das sich von den beiden Elementen unterscheidet, mit einem dritten Spektralfilter (F3) versehen ist, und
- der dritte Spektralfilter (F3) konfiguriert ist, um die Ausbreitung einer spektralen Komponente, die sich spektral zwischen der blauen Komponente und der grünen Komponente erstreckt, von einem Ende zum anderen des optischen Wegs (L) zu verhindern.

9. Head-up-Display (2) nach Anspruch 8, wobei der dritte Spektralfilter (F3) ein Bandstoppfilter ist.

## Claims

1. Head-up display (2) comprising, inside a housing (14):
- an image generation device (40) designed to generate a light beam (8) passing through an optical output element (41), the light beam (8) comprising a green component and a red component;
- a first reflector (6) designed to reflect the light beam (8) into an intermediate beam (9);
- a second reflector (7) designed to reflect the intermediate beam (9) into an output beam (10),
the housing (14) having an opening closed by a window (15) through which the output beam (10) passes,
the propagation of light through the optical output element (41), in reflection on the first reflector (6), in reflection on the second reflector (7) and through the window (15) defining an optical path (L) having two ends,
wherein two elements among the optical output element (41), the first reflector (6), the second reflector (7) and the window (15) are provided respectively with a first spectral filter (F1) and a second spectral filter (F2),
**characterized in that** the first spectral filter (F1) and the second spectral filter (F2) are configured to prevent the propagation from one end to the other of the optical path (L) of a spectral component extending spectrally between the green component and the red component.

2. Head-up display (2) according to claim 1, **characterized in that** the first spectral filter (F1) and the second spectral filter (F2) are configured to prevent the propagation from one end to the other of the optical path (L) of another spectral component extending spectrally over the infrared spectrum.

3. Head-up display (2) according to one of claims 1 to 2, **characterized in that** one spectral filter among the first spectral filter (F1) and the second spectral filter (F2) is a band-stop filter and **in that** the other spectral filter is a low-pass filter.

4. Head-up display (2) according to one of claims 1 to 3, **characterized in that** the two elements are the first reflector (6) and the second reflector (7).

5. Head-up display (2) according to one of claims 1 to 3, **characterized in that** the two elements are one among the first reflector (6) and the second reflector (7), and the window (15).

6. Head-up display (2) according to one of claims 1 to 3, **characterized in that** the two elements are one among the first reflector (6) and the second reflector (7), and the optical output element (41).

7. Head-up display (2) according to one of claims 1 to 3, **characterized in that** the two elements are the optical output element (41) and the window (15).

8. Head-up display (2) according to one of claims 1 to 7, **characterized in that**:
- the light beam (8) comprises a blue component,
- an additional element among the optical output element (41), the first reflector (6), the second reflector (7) and the window (15), different from the two elements, is provided with a third spectral filter (F3), and
- the third spectral filter (F3) is configured to prevent the propagation from one end to the other of the optical path (L) of a spectral component extending spectrally between the blue component and the green component.

9. Head-up display (2) according to claim 8, wherein the third spectral filter (F3) is a band-stop filter.
